(19) Europäisches Patentamt
European Patent Office
Office européen des brevets

(11) Veröffentlichungsnummer: **0 359 251 B1**

(12) # EUROPÄISCHE PATENTSCHRIFT

(45) Veröffentlichungstag der Patentschrift: **24.11.93**

(51) Int. Cl.$^5$: **C09D 183/07**, C08L 83/04, C08K 5/00, C08K 13/02, H01B 3/46

(21) Anmeldenummer: **89117020.1**

(22) Anmeldetag: **14.09.89**

(54) **Zum Beschichten der Oberfläche von elektrischen Hochspannungsisolatoren geeignete Massen.**

(30) Priorität: **16.09.88 DE 3831479**

(43) Veröffentlichungstag der Anmeldung:
**21.03.90 Patentblatt 90/12**

(45) Bekanntmachung des Hinweises auf die Patenterteilung:
**24.11.93 Patentblatt 93/47**

(84) Benannte Vertragsstaaten:
**BE DE FR GB SE**

(56) Entgegenhaltungen:
**EP-A- 0 231 519**
**EP-B- 0 110 370**
**DE-A- 2 900 162**
**DE-A- 3 423 770**
**US-A- 4 476 155**

(73) Patentinhaber: **WACKER-CHEMIE GMBH**
**Hanns-Seidel-Platz 4**
**D-81737 München(DE)**

(72) Erfinder: **Bosch, Erhard, Dr.-Dipl.-Chem.**
**Hoher-Göll-Weg 2**
**D-8269 Burgkirchen(DE)**
Erfinder: **Wolfer, Dietrich, Dr.-Dipl.-Chem.**
**Untereching 88**
**A-5110 Oberndorf(AT)**
Erfinder: **Maier, Reinhard**
**Talstrasse 6**
**A-5280 Braunau(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 359 251 B1

## Beschreibung

Die Erfindung betrifft zum Beschichten der Oberfläche von elektrischen Hochspannungsisolatoren geeignete, unter Ausschluß von Wasser lagerfähige, bei Zutritt von Wasser bei Raumtemperatur zu Elastomeren vernetzbare Massen, die durch Vermischen von

(I) kondensationsfähige Endgruppen aufweisendem Diorganopolysiloxan mit

(II) je Molekül mindestens drei direkt an Silicium gebundene hydrolysierbare Gruppen aufweisender Siliciumverbindung,

(III) gegebenenfalls organischem, nicht-reagierendem Lösungsmittel

sowie mindestens einem weiteren Stoff hergestellt worden sind.

Elektrische Hochspannungsisolatoren werden aus Glas, Porzellan oder Kunststoff gemacht. Unter normalen Umwelteinflüssen haben sie eine lange Lebensdauer. Wenn sie starken Umwelteinflüssen, d.h. großen Fremdbelastungen, ausgesetzt sind, wie sie z.B. durch Staub und Schmutz im Industrieklima, durch Salznebel im Küstenbereich oder durch Staub und Erosion im Wüstenklima hervorgerufen werden, kommt es durch diese leitenden Verunreinigungen zu Überschlägen und damit zu einer Verkürzung der Lebensdauer. Es ist deshalb notwendig, solche Isolatoren häufig zu reinigen. Um sich häufiges Reinigen der elektrischen Hochspannungsisolatoren zu ersparen, werden sie daher mit Organopolysiloxanelastomeren beschichtet. Die Siliconbeschichtung hydrophobiert dabei die Fremdbelastungen.

In US 4 476 155 (ausgegeben 9. Oktober 1984, R.G. Niemi, Dow Corning Corporation) sind zum Beschichten der Oberfläche von Hochspannungsisolatoren geeignete, unter Ausschluß von Wasser lagerfähige, bei Zutritt von Wasser bei Raumtemperatur zu Elastomeren vernetzbare Massen beschrieben, die durch Vermischen von kondensationsfähige Endgruppen aufweisendem Dimethylpolysiloxan mit Silan, an dessen Siliciumatom mindestens drei Oximgruppen über Sauerstoff gebunden sind, Aluminiumhydroxid mit einer durchschnittlichen Teilchengröße unter 5 $\mu$m und gegebenenfalls einem nicht-reagierenden Lösungsmittel hergestellt worden sind. Aluminiumhydroxid wird dabei in Mengen von 35 bis 55 Gewichtsprozent, bezogen auf das Gesamtgewicht der jeweiligen Masse aus Dimethylpolysiloxan, Silan und Aluminiumhydroxid, eingesetzt.

Es bestand die Aufgabe, unter Ausschluß von Wasser lagerfähige, bei Zutritt von Wasser bei Raumtemperatur zu Elastomeren vernetzbare Massen bereitzustellen, die ein Additiv enthalten, mit denen dünne Beschichtungen auf elektrische Hochspannungsisolatoren erhalten werden, die eine gute bis bessere Kriechstromfestigkeit und Lichtbogenbeständigkeit als bisher aufweisen, bessere mechanische Eigenschaften, insbesondere Reißfestigkeit und Reißdehnung, als bisher besitzen und deren mechanische Eigenschaften auf einfache Weise variiert werden können. Weiterhin bestand die Aufgabe, unter Ausschluß von Wasser lagerfähige, bei Zutritt von Wasser bei Raumtemperatur zu Elastomeren vernetzbare Massen bereitzustellen, die im Vergleich zu Massen mit gleicher Viskosität beim Aufsprühen auf die Oberfläche von elektrischen Hochspannungsisolatoren glatte, gleichmäßige und zusammenhängende Beschichtungen ergeben und dabei nur wenig zu Tropfen- oder Nasenbildung an den Kanten der Isolatorteller neigen. Weiterhin bestand die Aufgabe unter Ausschluß von Wasser lagerfähige, bei Zutritt von Wasser bei Raumtemperatur zu Elastomeren vernetzbare Massen bereitzustellen, wobei die damit beschichteten elektrischen Hochspannungsisolatoren eine besonders lange Lebensdauer haben, insbesondere wenn sie in Gegenden eingesetzt werden, wo sie besonders starker Verschmutzung und Feuchtigkeit ausgesetzt sind. Diese Aufgaben werden durch die Erfindung gelöst.

Gegenstand der Erfindung sind zum Beschichten der Oberfläche von elektrischen Hochspannungsisolatoren geeignete, unter Ausschluß von Wasser lagerfähige, bei Zutritt von Wasser bei Raumtemperatur zu Elastomeren vernetzbare Massen, die durch Vermischen von

(I) kondensationsfähige Endgruppen aufweisendem Diorganopolysiloxan mit

(II) je Molekül mindestens drei direkt an Silicium gebundene hydrolysierbare Gruppen aufweisender Siliciumverbindung,

(III) gegebenenfalls organischem, nicht-reagierendem Lösungsmittel

sowie mindestens einem weiteren Stoff hergestellt worden sind, dadurch gekennzeichnet, daß als mindestens ein weiterer Stoff

(IV) ein Additiv verwendet worden ist, das durch Vermischen von

(A) 60 bis 80 Gew.-% Diorganopolysiloxan mit 75 bis 85 Mol-% Dimethylsiloxaneinheiten und 15 bis 25 Mol-% Vinylmethylsiloxaneinheiten,

(B) 20 bis 35 Gew-% Titandioxid oder Zirkoniumdioxid,

(C) 0,05 bis 0,25 Gew-% Platin, berechnet als Element, in Form einer Platinverbindung oder eines Platinkomplexes und

(D) 1 bis 5 Gew.-% Organosiliciumverbindung mit über Kohlenstoff an Silicium gebundenem basischem Stickstoff

hergestellt worden ist, wobei die Summe der jeweils innerhalb der oben unter (A) bis (D) angegebenen Bereiche gewählten Prozentsätze 100 Gew.-% beträgt und sich die jeweiligen Gew.-% auf das Gesamtgewicht des Additivs (IV) beziehen.

Das Additiv (IV) ist in den erfindungsgemäßen Massen vorzugsweise in Mengen von 1 bis 4 Gew.-%, bezogen auf das Gesamtgewicht der jeweiligen zu Elastomeren vernetzbaren Massen ohne gegebenenfalls mitverwendetes, organisches Lösungsmittel (III), enthalten. Es verleiht den Organopolysiloxanelastomeren hohe Kriechstromfestigkeit und Lichtbogenbeständigkeit sowie Schwerbrennbarkeit.

Der Bestandteil (A) des erfindungsgemäßen Additivs (IV), das vinylreiche Diorganopolysiloxan, enthält gegebenenfalls neben Dimethylsiloxaneinheiten und Vinylmethylsiloxaneinheiten weitere Siloxaneinheiten wie Phenylmethylsiloxaneinheiten in Mengen von höchstens 18 Mol-%.

Als Bestandteil (B) des erfindungsgemäßen Additivs (IV) wird als Titandioxid bevorzugt feinteiliges, pyrogen in der Gasphase hergestelltes Titandioxid eingesetzt.

Beispiele für die als Bestandteil (C) des erfindungsgemäßen Additivs (IV) eingesetzten Verbindungen oder Komplexe von Platin sind $H_2[PtCl_6]\cdot 6H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2[PtCl_6]\cdot 6H_2O$ und Cyclohexanon, Platin-Vinylsiloxan-Komplexe, insbesondere Platin-1,3-Divinyl-1,1,3,3-tetramethyldisiloxankomplexe mit oder ohne Gehalt an nachweisbarem organischem Halogen, Platin-Norbornadien-methylacetonatkomplexe, Bis-(gammapicolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Vorzugsweise sind die Organosiliciumverbindungen mit über Kohlenstoff an Silicium gebundenem, basischem Stickstoff, die den Bestandteil (D) des erfindungsgemäßen Additivs (IV) ausmachen, solche ausgewählt aus der Gruppe der Silane der Formel

$Y_aR_bSi(OR^1)_{4-a-b}$,

worin R gleiche oder verschiedene einwertige Kohlenwasserstoffreste mit 1 bis 8 Kohlenstoffatom(en) je Rest, $R^1$ gleiche oder verschiedene Alkylgruppen mit 1 bis 4 Kohlenstoffatom(en) je Rest oder ein Rest der Formel $-SiR_3$, wobei R die oben dafür angegebene Bedeutung hat, Y gleiche oder verschiedene, einwertige SiC-gebundene organische Reste mit basischem Stickstoff bedeuten, a 1 oder 2 und b 0, 1 oder 2 ist,
und Disiloxane der Formel

$(Y_cR_dSi)_2O$,

worin R und Y die oben dafür angegebene Bedeutung haben, c 0, 1, 2 oder 3, insbesondere 1, ist, mit der Maßgabe, daß die Disiloxane mindestens einen Rest Y aufweisen, und d 0, 1, 2 oder 3, insbesondere 2, ist.

Die Organosiliciumverbindungen (D) mit über Kohlenstoff an Silicium gebundenem, basischem Stickstoff des erfindungsgemäßen Additivs (IV) können aber auch Organo(poly)siloxane mit maximal 10 Si-Atomen aus Einheiten der Formel

$Y_xR_ySi(OR^1)_zO_2$

worin R und $R^1$ die oben dafür angegeben Bedeutung haben, x 0, 1 oder 2, y 0, 1, 2 oder 3 und z 0, 1 oder 2 ist, sein.

Beispiele für Kohlenwasserstoffreste R sind der Methyl-, Ethyl-, n-Propyl-, Isopropyl- und 2-Ethylhexylrest, sowie Butylreste; aus Kohlenstoff- und Wasserstoffatomen ausgebaute Reste mit aliphatischer Mehrfachbindung, wie der Vinyl-und Allylrest; cycloaliphatische Kohlenwasserstoffreste, wie der Cyclopentylrest und Cyclohexylrest, sowie Methylcyclohexylreste; aromatische Kohlenwasserstoffreste, wie der Phenylrest und Xenylreste; Alkarylreste, wie Tolylreste; und Aralkylreste, wie der Benzylrest. Vorzugsweise sind die Kohlenwasserstoffreste R, insbesondere wenn sie an Siliciumatome, an die auch über Kohlenstoff basischer Stickstoff gebunden ist, gebunden sind, jedoch frei von aliphatischen Mehrfachbindungen. Schon wegen der leichteren Zugänglichkeit ist weiterhin bevorzugt, daß mindestens 50 % der Anzahl der Reste R Methylreste sind.

Die oben genannten Beispiele für Alkylreste R mit 1 bis 4 Kohlenstoffatom(en) je Rest gelten im vollen Umfang auch für die Reste $R^1$.

Vorzugsweise sind die Reste Y solche der Formel

$R^2NHR^3$- ,

worin $R^2$ Wasserstoff oder gleiche oder verschiedene Alkyl-oder Cycloalkyl- oder Aminoalkylreste mit 1 bis 8 Kohlenstoffatomen je Rest und $R^3$ gleiche oder verschiedene geradkettige oder verzweigte von aliphatischen Mehrfachbindungen freie Kohlenwasserstoffreste mit einem Kohlenstoffatom oder 3 oder 4 Kohlenstoffatomen je Rest, insbesondere den Rest der Formel

$-(CH_2)_3-$

bedeutet.

Die Beispiele für Alkyl- und Cycloalkylreste R gelten im vollen Umfang auch für Alkyl- bzw. Cycloalkylreste $R^2$.

Beispiele für Aminoalkylreste $R^2$ sind solche der Formel

$H_2N(CH_2)_3-$
$H_2N(CH_2)_2NH(CH_2)_2-$
$H_2N(CH_2)_2-$
$(H_3C)_2NH(CH_2)_2-$
$H_2N(CH_2)_4-$
$H(NHCH_2CH_2)_3-$

und

$C_4H_9NH(CH_2)_2NH(CH_2)_2-$.

Bevorzugt werden als Organosiliciumverbindungen (D) mit über Kohlenstoff an Silicium gebundenem basischem Stickstoff des erfindungsgemäßen Additivs (IV)
N-(2-Aminoethyl)-3-aminopropyltrimethoxysilan,
N-(2-Aminoethyl)-3-aminopropyltriethoxysilan,
N-(2-Aminoethyl)-3-aminopropylmethyldimethoxysilan,
3-Aminopropyltriethoxysilan,
N-(Cyclohexyl)-3-aminopropyltrimethoxysilan,
N-(2-Aminoethyl)-3-aminopropyl-tris(trimethylsiloxy)silan und
1,2-Bis[N-(2-aminoethyl)-3-aminopropyl]-1,1,2,2-tetramethyldisiloxan
eingesetzt.

Besonders bevorzugt wird N-(2-Aminoethyl)-3-aminopropyltrimethoxysilan eingesetzt.

Die Bestandteile (A) bis (D) des erfindungsgemäßen Additivs (IV) werden in einem Rührer oder Kneter miteinander vermischt. Das Additiv (IV) kann dann nach mindestens zwei Stunden langem Rühren bzw. Kneten und anschließendem, zwei bis drei Tage langem Stehenlassen der Mischung bei Raumtemperatur verwendet werden. Bevorzugt wird die Mischung anwendungsfertig gemacht, indem sie mindestens 120 Minuten lang bei 80° bis 150°C erhitzt wird.

Das vinylreiche Diorganopolysiloxan (A), die Platinverbindung bzw. der Platinkomplex (C) sowie die Organosiliciumverbindung mit über Kohlenstoff an Silicium gebundenem, basischem Stickstoff (D) werden durch das tagelange Stehenlassen bzw. das Erhitzen miteinander umgesetzt und ergeben zusammen mit den metalloxiden (B), die lediglich die Wirkung verstärken, das Additiv (IV), das nur in geringeren Mengen den übrigen Bestandteilen der zu Organopolysiloxanelastomeren vernetzbaren Massen zugesetzt werden muß, um Beschichtungen von Organopolysiloxanelastomeren mit hoher Kriechstromfestigkeit und Lichtbogenbeständigkeit sowie Schwerbrennbarkeit zu erhalten.

Als kondensationsfähige Endgruppen aufweisende Diorganopolysiloxane (I) werden in den erfindungsgemäßen Massen vorzugsweise solche der Formel

$HO(SiR^4_2O)_mSiR^4_2OH$ ,

wobei $R^4$ einen einwertigen, gegebenenfalls halogenierten Kohlenwasserstoffrest mit 1 bis 18

Kohlenstoffatom(en) je Rest bedeutet, und m eine ganze Zahl im Wert von mindestens 10 ist, verwendet. Vorzugsweise beträgt die durchschnittliche Viskosität der Diorganopolysiloxane (I) 500 bis $1 \cdot 10^6$ mPa•s bei 25 °C.

Bei der Bereitung der erfindungsgemäßen Massen werden die Diorganopolysiloxane (I) vorzugsweise in Mengen von 50 bis 90 Gew.-%, bezogen auf das Gesamtgewicht der jeweiligen Massen ohne gegebenenfalls mitverwendetes, organisches Lösungsmittel (III), verwendet.

Innerhalb der bzw. entlang den Siloxanketten der oben angegebenen Formel können, was durch derartige Formeln üblicherweise nicht dargestellt wird, zusätzlich zu den Diorganosiloxaneinheiten ($SiR^4_2O$) noch andere Siloxaneinheiten vorliegen. Beispiele für solche anderen, meist jedoch lediglich als mehr oder weniger schwer vermeidbare Verunreinigungen vorliegende, Siloxaneinheiten sind solche der Formel $R^4SiO_{3/2}$, $R^4_3SiO_{1/2}$ und $SiO_{4/2}$, wobei $R^4$ jeweils die oben dafür angegebene Bedeutung hat. Vorzugsweise beträgt die Menge an solchen anderen Siloxaneinheiten als Diorganosiloxaneinheiten jedoch insgesamt höchstens 5 Mol-% der in den kondensationsfähige Endgruppen aufweisenden Diorganopolysiloxanen (I) vorliegenden Siloxaneinheiten. Die Hydroxylgruppen in der oben angegebenen Formel von kondensationsfähige Endgruppen aufweisenden Diorganopolysiloxanen (I) können, falls erwünscht, vollständig oder teilweise durch andere kondensationsfähige Gruppen, wie Alkoxygruppen mit 1 bis 4 Kohlenstoffatomen je Gruppe, ersetzt sein.

Als je Molekül mindestens drei direkt an Silicium gebundene hydrolysierbare Gruppen aufweisende Siliciumverbindungen (II) werden vorzugsweise Silane der Formel

$$R^4_n SiZ_{4-n} ,$$

wobei n 0 oder 1 ist, $R^4$ die oben dafür angegebene Bedeutung hat und Z gleiche oder verschiedene hydrolysierbare Gruppen bedeutet und ausgewählt ist aus der Gruppe bestehend aus

| | |
|---|---|
| Oximgruppen | $-ON=X$ |
| Aminogruppen | $-NR^7_2$ |
| Acylaminogruppen | $-NR^7COR^7$ |
| Aminoxygruppen | $-ONR^7_2$ |
| Acyloxygruppen | $-OOCR^7$ und |
| gegebenenfalls substituierte Kohlenwasserstoffoxygruppen | $-OR^7$ , |

worin X gleiche oder verschiedene Reste der Formel

$$R^5_2C= \text{ oder } R^6C= ,$$

bedeutet, worin $R^5$ gleiche oder verschiedene, einwertige Kohlenwasserstoffreste mit 1 bis 5 Kohlenstoffatom(en) je Rest und $R^6$ einen zweiwertigen Kohlenwasserstoffrest mit 5 bis 6 Kohlenstoffatomen bedeutet, und $R^7$ Wasserstoff oder gleiche oder verschiedene, einwertige, gegebenenfalls substituierte Kohlenwasserstoffreste bedeutet, und deren 2 bis 10 Siliciumatome je Molekül aufweisende Teilhydrolysate verwendet.

Beispiele für Kohlenwasserstoffreste $R^4$ sind Alkylreste, wie der Methyl-, Ethyl-, n-Propyl-, Isopropyl-, n-Butyl- und sec.-Butylrest sowie Hexyl- und Octadecylreste; aliphatische Reste mit Kohlenstoff-Kohlenstoff-Doppelbindung, wie der Vinyl- und Allylrest; cycloaliphatische Kohlenwasserstoffreste, wie der Cyclopentyl- und Cyclohexylrest, sowie Methylcyclohexylreste; Arylreste, wie der Phenylrest und Xenylreste; Alkarylreste, wie Tolylreste; und Aralkylreste, wie der Benzylrest.

Beispiele für halogenierte Kohlenwasserstoffreste $R^4$ sind Halogenalkylreste, wie der 3,3,3-Trifluorpropylrest; und Halogenarylreste, wie o-, p- und m-Chlorphenylreste.

Schon wegen der leichteren Zugänglichkeit ist bevorzugt, daß mindestens 50 % der Anzahl der Reste $R^4$, besonders bevorzugt mindestens 90 % der Anzahl der Reste $R^4$, Methylreste sind.

Die wichtigsten Beispiele für Kohlenwasserstoffreste $R^5$ sind der Methyl- und der Ethylrest. Das wichtigste Beispiel für einen Rest der Formel $R^6C=NO-$ ist der Cyclohexanonoximrest.

Die Beispiele für die Kohlenwasserstoffreste $R^4$ gelten im vollen Umfang für die Kohlenwasserstoffreste $R^7$.

Bevorzugt werden als je Molekül mindestens drei direkt an Silicium gebundene hydrolysierbare Gruppen aufweisende Siliciumverbindungen (II) Silane der Formel

$R^4_n\,Si(ON=X)_{4-n}$ ,

wobei $R^4$, X und n die oben dafür angegebene Bedeutung haben, und deren 2 bis 10 Siliciumatome je Molekül aufweisende Teilhydrolysate verwendet.

Besonders bevorzugt wird dabei
Methyltris-(methylethylketoxim)-silan und
Tetra-(methylethylketoxim)-silan
verwendet.

Beispiele für Aminogruppen sind die n-Butylamino-, sec.-Butylamino- und Cyclohexylaminogruppe.

Ein Beispiel für eine Acylaminogruppe ist die Benzamidogruppe.

Beispiele für Aminoxygruppen sind die Dimethylaminoxy- und Diethylaminoxygruppe.

Beispiele für Acyloxygruppen sind die Formyloxy- und Acetoxygruppe.

Beispiele für Kohlenwasserstoffoxygruppen sind die Methoxy-, Ethoxy- und Isopropenyloxygruppe.

Ein Beispiel für eine substituierte Kohlenwasserstoffoxygruppe ist die Methoxyethylenoxygruppe.

Vorzugsweise werden bei der Bereitung der erfindungsgemäßen Massen die je Molekül mindestens drei direkt an Silicium gebundene hydrolysierbare Gruppen aufweisende Siliciumverbindungen (II) in Mengen von 3 bis 15 Gew.-%, insbesondere 5 bis 10 Gew.-%, jeweils bezogen auf das Gesamtgewicht der jeweiligen Massen ohne gegebenenfalls mitverwendetes, organisches Lösungsmittel (III), verwendet.

Bei der Bereitung der erfindungsgemäßen Massen werden gegebenenfalls organische, nicht-reagierende Lösungsmittel (III) mitverwendet. Beispiele für organische, nicht-reagierende Lösungsmittel, die bei der Bereitung der erfindungsgemäßen Massen mitverwendet werden können, um den Massen eine für die Verarbeitung ausreichend niedrige Viskosität zu verleihen, sind aliphatische, aromatische und chlorierte Kohlenwasserstoffe, wie Benzine, Testbenzine, Toluol, Xylol, Trichlorethen und Tetrachlorethen. Organisches, nicht-reagierendes Lösungsmittel wird in Mengen von vorzugsweise 10 bis 80 Gew.-%, insbesondere 30 bis 70 Gew.-%, jeweils bezogen auf das Gesamtgewicht der jeweiligen Massen mit gegebenenfalls mitverwendetem, organischem Lösungsmittel (III), mitverwendet.

Weitere Stoffe außer dem Additiv (IV), die bei der Bereitung der erfindungsgemäßen Massen mitverwendet werden können, sind vorzugsweise verstärkende anorganische Füllstoffe, nicht verstärkende anorganische Füllstoffe, Kondensationskatalysatoren, Weichmacher, Mittel zur Verbesserung der Haftung der aus den erfindungsgemäßen Massen hergestellten Elastomeren auf den Unterlagen, auf denen die Elastomere erzeugt wurden, Pigmente und lösliche Farbstoffe. Weiterhin können weitere Stoffe wie Riechstoffe, Fungicide, harzartige Organopolysiloxane, einschließlich solcher aus $(CH_3)_3SiO_{1/2}$-und $SiO_{4/2}$-Einheiten, rein-organische Harze, wie Homo- oder Mischpolymerisate des Acrylnitrils, Polystyrol, Polyvinylchlorid oder Polypropylen, wobei solche rein-organischen Harze, insbesondere Mischpolymerisate aus Styrol und n-Butylacrylat, bereits in Gegenwart vom kondensationsfähige Endgruppen aufweisenden Diorganopolysiloxan durch Polymerisation der genannten Monomeren mittels freier Radikale erzeugt worden sein können, Korrosionsinhibitoren, Polyglykole, die verestert oder verethert sein können, Oxidationsinhibitoren, Hitzestabilisatoren, flammabweisend machende Mittel, Lichtschutzmittel und Mittel zur Verlängerung der Hautbildungszeit, wie Silane mit einem SiC-gebundenen Mercaptoalkylrest sowie zellenerzeugende Mittel, z.B. Azodicarbonamid mitverwendet werden.

Beispiele für verstärkende anorganische Füllstoffe, also für anorganische Füllstoffe mit einer Oberfläche von mindestens 50 $m^2/g$, sind insbesondere pyrogen erzeugte Siliciumdioxide, unter Erhaltung der Struktur entwässerte Kieselsäurehydrogele und andere Arten von gefälltem Siliciumdioxid mit einer Oberfläche von mindestens 50 $m^2/g$.

Beispiele für nicht verstärkende anorganische Füllstoffe, also für anorganische Füllstoffe mit einer Oberfläche von weniger als 50 $m^2/g$, sind bzw. können sein Quarzmehl, Diatomeenerde, Eisenoxid, Zinkoxid, Titanoxid, Calciumcarbonat, Magnesiumcarbonat, Zinkcarbonat, Ruß, Glimmer und Neuburger Kreide.

Alle diese verstärkenden und nicht verstärkenden anorganischen Füllstoffe können hydrophil sein oder hydrophobiert sein, beispielsweise durch die Behandlung mit Organosilanen bzw. Organosiloxanen oder Organosilazanen, wie Hexamethyldisilazan oder durch Veretherung von Hydroxylgruppen mit Alkoxygruppen. Es kann eine Art von Füllstoff, es kann auch ein Gemisch von mindestens zwei Füllstoffen verwendet werden. Die Füllstoffe werden dabei in Mengen von vorzugsweise 5 bis 30 Gew.-%, bezogen auf das Gesamtgewicht der jeweiligen Massen ohne gegebenenfalls mitverwendetes, organisches Lösungsmittel (III), mitverwendet.

Beispiele für Kondensationskatalysatoren sind Butyltitanate und organische Zinnverbindungen, wie Di-n-butylzinndiacetat, Di-n-butylzinndilaurat und Umsetzungsprodukte von je Molekül mindestens zwei über Sauerstoff an Silicium gebundene, gegebenenfalls durch eine Alkoxygruppe substituierte, einwertige Kohlenwasserstoffreste als hydrolysierbare Gruppen aufweisendem Silan oder dessen Oligomer mit Diorganozinndiacylat, wobei in diesen Umsetzungsprodukten alle Valenzen der Zinnatome durch Sauerstoffatome der Gruppierung

≡SiOSn≡

bzw. durch SnC-gebundene, einwertige organische Reste abgesättigt sind. Die Herstellung derartiger Umsetzungsprodukte ist in US 4 460 761 (ausgegeben 17. Juli 1984, A. Schiller et al., Wacker-Chemie GmbH) eingehend beschrieben. Kondensationskatalysator wird dabei in Mengen von vorzugsweise 0,01 bis 1,00 Gew.-%, bezogen auf das Gesamtgewicht der jeweiligen Massen ohne gegebenenfalls mitverwendetes organisches Lösungsmittel (III), mitverwendet.

Beispiele für Mittel zur Verbesserung der Haftung der aus den erfindungsgemäßen Massen hergestellten Elastomeren auf den Unterlagen, auf denen die Elastomere erzeugt wurden, sind organofunktionelle Silane, wie aminofunktionelle Silane, z.B. $\gamma$-Aminopropyltriethoxysilan und N-(2-Aminoethyl)-3-aminopropyltriethoxysilan. Sie werden in Mengen von vorzugsweise 0,5 bis 5,0 Gew.-%, insbesondere 1,0 bis 1,5 Gew.-%, bezogen auf das Gesamtgewicht der jeweiligen Massen ohne gegebenenfalls mitverwendetes organisches Lösungsmittel (III), mitverwendet.

Beispiele für Weichmacher sind bei Raumtemperatur flüssige, durch Trimethylsiloxygruppen endblokkierte Dimethylpolysiloxane mit einer Viskosität von mindestens 10 mPa•s. Sie werden in Mengen von vorzugsweise 5 bis 50 Gew.-%, bezogen auf das Gesamtgewicht der jeweiligen Massen ohne gegebenenfalls mitverwendetes organisches Lösungsmittel (III), mitverwendet.

Für die Vernetzung der erfindungsgemäßen Massen reicht der übliche Wassergehalt der Luft aus. Die Vernetzung kann, falls erwünscht, auch bei höheren oder niedrigeren Temperaturen als Raumtemperatur, z.B. bei -5 °C bis 10 °C oder bei 30 °C bis 50 °C, durchgeführt werden.

Die erfindungsgemäßen Massen werden zum Beschichten der Oberfläche von Isolatoren, z.B. Standisolatoren, Durchführungen, Meßwandler und Stabisolatoren, die aus Porzellan, Glas oder Kunststoff sind und im Mittel- und Hochspannungsbereich eingesetzt werden, verwendet. Das Beschichten kann dabei z.B. durch Sprühen, Streichen, Walzen oder Tauchen erfolgen. Vorzugsweise erfolgt das Beschichten durch Sprühen. Die Dicke der erfindungsgemäßen, elastomeren Beschichtung beträgt vorzugsweise mindestens 0,25 mm.

In den folgenden Beispielen beziehen sich alle Angaben von Teilen und Prozentsätzen auf das Gewicht, soweit nichts anderes angegeben ist.

Die in den folgenden Beispielen verwendete Mischung aus Platin-Vinylsiloxan-Komplex und Verdünnungsmittel wurde hergestellt wie folgt:
Zu einer Mischung aus 10 Teilen $H_2PtCl_6.6H_2O$, 20 Teilen 1,3-Divinyl-1,1,3,3-tetramethyldisiloxan und 50 Teilen Ethanol wurden 20 Teile Natriumbicarbonat gegeben. Das Gemisch wurde 30 Minuten unter Rühren zum Sieden unter Rückfluß erwärmt, dann 15 Stunden stehen gelassen und danach filtriert. Aus dem Filtrat wurden bei etwa 16 hPa (abs.) die flüchtigen Bestandteile abdestilliert. Als Rückstand wurden 17 Teile einer Flüssigkeit erhalten, die in Benzol gelöst wurde. Die Lösung wurde filtriert und aus dem Filtrat das Benzol abdestilliert. Der Rückstand wurde mit Dimethylvinylsiloxaneinheiten als endständige Einheiten aufweisendem Dimethylpolysiloxan mit einer Viskosität von 1400 mPa.s bei 25 °C als Verdünnungsmittel in solcher Menge vermischt, daß die Mischung 1 Gewichts-% Platin, berechnet als Element, enthält.

**Beispiel 1**

a) 100 Teile eines 20 Mol-% Vinylmethylsiloxaneinheiten aufweisenden Dimethylpolysiloxans mit einer Viskosität von 50 000 mPa.s bei 25 °C werden in einem Rührwerk mit 50 Teilen pyrogen in der Gasphase erzeugtem Titandioxid homogen vermischt. Dann werden 25 Teile der 1 Gewichts-% Platin, berechnet als Element, enthaltenden Mischung aus Platin-Vinylsiloxan-Komplex und Verdünnungsmittel zugegeben. Nach dem Homogenisieren der Mischung werden der Mischung 4 Teile N-(2-Aminoethyl)-3-aminopropyltrimethoxysilan zugemischt. Die Mischung wird anschließend langsam unter starkem Rühren auf 150 °C erhitzt und weitere zwei Stunden bei 150 °C gerührt.

b) 29,4 Teile eines in den endständigen Einheiten je eine Si-gebundene Hydroxylgruppe aufweisenden Dimethylpolysiloxans mit einer Viskosität von 20 000 mPa•s bei 25 °C werden in der angegebenen Reihenfolge mit 6,1 Teilen eines pyrogen in der Gasphase erzeugten Siliciumdioxids mit einer BET-Oberfläche von 150 $m^2/g$, 1,0 Teilen des Additivs, dessen Herstellung oben unter a) beschrieben wurde, 60,0 Teilen eines aromatenarmen Testbenzins mit einem Siedebereich von 100° bis 140 °C bei 1020 hPa (abs.), 2,85 Teilen Methyltris-(methylethylketoxim)silan, 0,6 Teilen N-(2-Aminoethyl)-3-aminopropyl-

trimethoxysilan und 0,05 Teilen eines Umsetzungsprodukts, das durch 6 Stunden langes Erwärmen eines Gemisches aus 4 Teilen Tetraethylsilicat und 1 Teil Di-n-butylzinndiacetat auf 120 °C beim Druck der umgebenden Atmosphäre unter Rühren und gleichzeitigem Abdestillieren des entstandenen Essigsäureethylesters hergestellt wurde, vermischt.

Es wird eine lösungsmittelhaltige, fließfähige RTV-1 Masse erhalten, die unter Ausschluß von Wasser lagerfähig ist. Die Masse hat eine Viskosität von 3200 mPa•s bei 25 °C und läßt sich hervorragend auf die Oberfläche von Isolatoren, z.B. mit einem Airless-Gerät, versprühen. Bei Zutritt von Luftfeuchtigkeit reagiert die Masse unter gleichzeitiger Verdunstung des Lösungsmittels zu einer glatten, gummiartigen Schicht.

Es wurden 2 mm dicke Folien aus den Massen hergestellt, deren mechanische und elektrische Eigenschaften nach 14 Tagen Lagerung bei Raumtemperatur bestimmt wurden. Die Ergebnisse sind in Tabelle 1 zusammengefaßt.

Tabelle 1

| | | |
|---|---|---|
| Shore A Härte | DIN 53 505 | 44 |
| Reißfestigkeit | DIN 53 504 | 2,6 $N/mm^2$ |
| Reißdehnung | DIN 53 504 | 330 % |
| Kriechstromfestigkeit | DIN 57 303 bei 3,5 kV | >360 min |
| Lichtbogenfestigkeit | DIN 57 441 | 240 sec |

**Vergleichsversuch 1**

Die unter Beispiel 1 beschriebene Arbeitsweise wird wiederholt mit der Abänderung, daß kein Additiv mitverwendet wird. Man erhält eine Masse mit einer Viskosität von 3100 mPa•s bei 25 °C.

Es wurden 2 mm dicke Folien aus den Massen hergestellt, deren mechanische und elektrische Eigenschaften nach 14 Tagen Lagerung bei Raumtemperatur bestimmt wurden. Die Ergebnisse sind in Tabelle zusammengefaßt.

Tabelle 2

| | | |
|---|---|---|
| Shore A Härte | DIN 53 505 | 42 |
| Reißfestigkeit | DIN 53 504 | 2,6 $N/mm^2$ |
| Reißdehnung | DIN 53 504 | 340 % |
| Kriechstromfestigkeit | DIN 57 303 bei 3,5 kV | 53 min |
| Lichtbogenfestigkeit | DIN 57 441 | 138 sec |

**Vergleichsversuch 2**

30,7 Teile eines in den endständigen Einheiten je eine Si-gebundene Hydroxylgruppe aufweisenden Dimethylpolysiloxans mit einer Viskosität von 20 000 mPa•s bei 25 °C werden mit 41,1 Teilen eines Aluminiumoxidhydrats einer durchschnittlichen Teilchengröße von 0,7 µm, einem spezifischen Gewicht von 2,42 $g/cm^3$ und 35 Gew.-% Hydratwasser unter Erhitzen auf 175 °C unter vollem Vakuum eine Stunde lang vermischt. Nach Abkühlung dieser Mischung auf Raumtemperatur werden 22 Teile eines aromatenarmen Testbenzins mit einem Siedebereich von 100° bis 140 °C bei 1020 hPa, 6,1 Teile Methyltris-(methylethylketoxim)-silan und 0,1 Teile Dibutylzinndioctoat mit dieser Mischung vermischt.

Es wird eine lösungsmittelhaltige, fließfähige RTV-1 Masse gemäß US 4 476 155 mit einer Viskosität von 3000 mPa•s erhalten. Diese Masse läßt sich im Gegensatz zu der erfindungsgemäßen Masse gemäß Beispiel 1 nicht auf die Oberfläche von Isolatoren, z.B. mit einem Airless-Gerät, versprühen. Wird die Masse mit weiterem Testbenzin verdünnt, in Mengen von 33 % Testbenzin, bezogen auf das Gesamtgewicht der Masse, so läßt sie sich auf die Oberfläche von Isolatoren, z.B. mit einem Airless-Gerät, versprühen. Es wird dabei aber kein gleichmäßiger Schichtaufbau erhalten, und an den Kanten der Isolatorteller bilden sich Tropfnasen.

Es wurden 2 mm dicke Folien aus den Massen hergestellt, deren mechanische und elektrische Eigenschaften nach 14 Tagen Lagerung bei Raumtemperatur bestimmt wurden. Die Ergebnisse sind in

Tabelle 3 zusammengefaßt.

Tabelle 3

| | | |
|---|---|---|
| Shore A Härte | DIN 53 505 | 57 |
| Reißfestigkeit | DIN 53 504 | 1,9 $N/mm^2$ |
| Reißdehnung | DIN 53 504 | 130 % |
| Kriechstromfestigkeit | DIN 57 303 bei 3,5 kV | 290 min |
| Lichtbogenfestigkeit | DIN 57 441 | 200 sec |

**Beispiel 2**

21,1 Teile eines in den endständigen Einheiten je eine Si-gebundene Hydroxylgruppe aufweisenden Dimethylpolysiloxans mit einer Viskosität von 20 000 mPa•s bei 25 °C werden in der angegebenen Reihenfolge mit 8,5 Teilen eines pyrogen in der Gasphase erzeugten Siliciumdioxids mit einer BET-Oberfläche von 150 $m^2/g$, 0,85 Teilen des Additivs, dessen Herstellung in Beispiel 1 unter a) beschrieben wurde, 66,6 Teilen eines aromatenarmen Testbenzins mit einem Siedebereich von 100° bis 140 °C bei 1020 hPa (abs.), 2,4 Teilen Methyltris-(methylethylketoxim)-silan, 0,5 Teilen N-(2-Aminoethyl)-3-aminopropyltrimethoxysilan und 0,05 Teilen eines Umsetzungsprodukts, das durch 6 Stunden langes Erwärmen eines Gemisches aus 4 Teilen Tetraethylsilicat und 1 Teil Di-n-butylzinndiacetat auf 120 °C beim Druck der umgebenden Atmosphäre unter Rühren und gleichzeitigem Abdestillieren des entstandenen Essigsäureethylesters hergestellt wurde, vermischt.

Es wird eine lösungsmittelhaltige, fließfähige RTV-1 Masse erhalten, die unter Ausschluß von Wasser lagerfähig ist. Die Masse hat eine Viskosität von 5400 mPa•s bei 25 °C und läßt sich hervorragend auf die Oberfläche von Isolatoren, z.B. mit einem Airless-Gerät, versprühen. Bei Zutritt von Luftfeuchtigkeit reagiert die Masse unter gleichzeitiger Verdunstung des Lösungsmittels zu einer glatten, gummiartigen Schicht.

Es wurden 2 mm dicke Folien aus den Massen hergestellt, deren mechanische und elektrische Eigenschaften nach 14 Tagen Lagerung bei Raumtemperatur bestimmt wurden. Die Ergebnisse sind in Tabelle 4 zusammengefaßt.

Tabelle 4

| | | |
|---|---|---|
| Shore A Härte | DIN 53 505 | 52 |
| Reißfestigkeit | DIN 53 504 | 5,2 $N/mm^2$ |
| Reißdehnung | DIN 53 504 | 440 % |
| Kriechstromfestigkeit | DIN 57 303 bei 3,5 kV | >360 min |
| Lichtbogenfestigkeit | DIN 57 441 | 280 sec |

**Beispiel 3**

In einem Z-Kneter wird ein Gemisch aus 75 Teilen eines in den endständigen Einheiten je eine Si-gebundene Hydroxylgruppe aufweisenden Dimethylpolysiloxans mit einer Viskosität von 50 000 mPa•s bei 25 °C, 5 Teilen Hexamethyldisilazan und 2,5 Teilen Wasser mit 20 Teilen eines pyrogen in der Gasphase erzeugten Siliciumdioxids mit einer BET-Oberfläche von 150 $m^2/g$ bis zum Vorliegen einer homogenen Mischung verknetet. Danach wird die Mischung auf 120 °C erwärmt, bei 120 °C 5 Stunden lang geknetet, und dann werden bei 120 °C und 100 hPa (abs.) überschüssiges Hexamethyldisilazan und Wasser abdestilliert. 37,7 Teile der so erhaltenen Mischung mit einer Viskosität von 300 000 mPa•s bei 25 °C werden in der angegebenen Reihenfolge mit 1,1 Teilen des Additivs, dessen Herstellung in Beispiel 1 unter a) beschrieben wurde, 57,5 Teilen eines aromatenarmen Testbenzins mit einem Siedebereich von 100° bis 140 °C bei 1020 hPa (abs.), 3,0 Teilen Methyltris-(methylethylketoxim)-silan, 0,65 Teilen N-(2-Aminoethyl)-3-aminopropyltrimethoxysilan und 0,05 Teilen eines Umsetzungsprodukts, das durch 6 Stunden langes Erwärmen eines Gemisches aus 4 Teilen Tetraethylsilicat und 1 Teil Di-n-butylzinndiacetat auf 120 °C beim Druck der umgebenden Atmosphäre unter Rühren und gleichzeitigem Abdestillieren des entstandenen Essigsäureethylesters hergestellt wurde, vermischt.

Es wird eine lösungsmittelhaltige, fließfähige RTV-1 Masse erhalten, die unter Ausschluß von Wasser lagerfähig ist. Die Masse hat eine Viskosität von 1700 mPa•s bei 25 °C und läßt sich hervorragend auf die Oberfläche von Isolatoren, z.B. mit einem Airless-Gerät, versprühen. Bei Zutritt von Luftfeuchtigkeit reagiert die Masse unter gleichzeitiger Verdunstung des Lösungsmittels zu einer glatten, gummiartigen Schicht.

Es wurden 2 mm dicke Folien aus den Massen hergestellt, deren mechanische und elektrische Eigenschaften nach 14 Tagen Lagerung bei Raumtemperatur bestimmt wurden. Die Ergebnisse sind in Tabelle 5 zusammengefaßt.

Tabelle 5

| | | |
|---|---|---|
| Shore A Härte | DIN 53 505 | 43 |
| Reißfestigkeit | DIN 53 504 | 4,8 $N/mm^2$ |
| Reißdehnung | DIN 53 504 | 480 % |
| Kriechstromfestigkeit | DIN 57 303 bei 3,5 kV | 343 min |
| Lichtbogenfestigkeit | DIN 57 441 | 230 sec |

## Patentansprüche

**1.** Zum Beschichten der Oberfläche von elektrischen Hochspannungsisolatoren geeignete, unter Ausschluß von Wasser lagerfähige, bei Zutritt von Wasser bei Raumtemperatur zu Elastomeren vernetzbare Massen, die durch Vermischen von

(I) kondensationsfähige Endgruppen aufweisendem Diorganopolysiloxan mit

(II) je Molekül mindestens drei direkt an Silicium gebundene hydrolysierbare Gruppen aufweisender Siliciumverbindung

(III) gegebenenfalls organisches, nicht-reagierendes Lösungsmittel,

sowie mindestens einem weiteren Stoff hergestellt worden sind, dadurch gekennzeichnet, daß als mindestens ein weiterer Stoff

(IV) ein Additiv verwendet worden ist, das durch Vermischen von

(A) 60 bis 80 Gew.-% Diorganopolysiloxan mit 75 bis 85 Mol-% Dimethylsiloxaneinheiten und 15 bis 25 Mol-% Vinylmethylsiloxaneinheiten,

(B) 20 bis 35 Gew.-% Titandioxid oder Zirkoniumdioxid,

(C) 0,05 bis 0,25 Gew.-% Platin, berechnet als Element, in Form einer Platinverbindung oder eines Platinkomplexes und

(D) 1 bis 5 Gew.-% Organosiliciumverbindung mit über Kohlenstoff an Silicium gebundenem basischem Stickstoff

hergestellt worden ist, wobei die Summe der jeweils innerhalb der oben unter (A) bis (D) angegebenen Bereiche gewählten Prozentsätze 100 Gew.-% beträgt und sich die jeweiligen Gew.-% auf das Gesamtgewicht des Additivs (IV) beziehen.

**2.** Massen nach Anspruch 1, dadurch gekennzeichnet, daß ein Additiv (IV) verwendet worden ist, das

(1) durch Vermischen der Bestandteile (A) bis (D) gemäß Anspruch 1 und anschließend an das Vermischen

(2) durch wenigstens 120 Minuten langes Erhitzen des Gemisches auf 80° bis 150 °C

hergestellt worden ist.

**3.** Massen nach Anspruch 1 oder 2, dadurch gekennzeichnet, daß das Additiv (IV) in Mengen von 1 bis 4 Gew.-%, bezogen auf das Gesamtgewicht der jeweiligen zu Elastomeren vernetzbaren Massen ohne gegebenenfalls mitverwendetes, organisches Lösungsmittel (III), verwendet worden ist.

**4.** Massen nach Anspruch 1, 2 oder 3, dadurch gekennzeichnet, daß als

(D) Organosiliciumverbindung mit über Kohlenstoff an Silicium gebundenem basischem Stickstoff solche ausgewählt aus der Gruppe der

Silane der Formel

$$Y_aR_bSi(OR^1)_{4-a-b},$$

worin R gleiche oder verschiedene einwertige Kohlenwasserstoffreste mit 1 bis 8 Kohlenstoffatomen je Rest, $R^1$ gleiche oder verschiedene Alkylgruppen mit 1 bis 4 Kohlenstoffatom(en) je Rest oder ein Rest der Formel $-SiR_3$, wobei R die oben dafür angegebene Bedeutung hat, Y gleiche oder verschiedene, einwertige SiC-gebundene organische Reste mit basischem Stickstoff bedeuten, a 1 oder 2 und b 0, 1 oder 2 ist,
und Disiloxane der Formel

$(Y_cR_dSi)_2O$,

worin R und Y die oben dafür angegebene Bedeutung haben, c 0, 1, 2 oder 3, insbesondere 1, ist, mit der Maßgabe, daß die Disiloxane mindestens einen Rest Y aufweisen, und d 0, 1, 2 oder 3, insbesondere 2, ist,
eingesetzt worden ist.

**5.** Massen nach einem der Ansprüche 1 bis 4, dadurch gekennzeichnet, daß als kondensationsfähige Endgruppen aufweisendes Diorganopolysiloxan (I) solches der Formel

$HO(SiR^4_2O)_mSiR^4_2OH$,

wobei $R^4$ einen einwertigen gegebenenfalls halogenierten Kohlenwasserstoffrest mit 1 bis 18 Kohlenstoffatom(en) je Rest bedeutet, m eine ganze Zahl im Wert von mindestens 10 ist und die durchschnittliche Viskosität 500 bis $1 \cdot 10^6$ mPa•s bei 25 °C beträgt,
verwendet worden ist.

**6.** Massen nach einem der Ansprüche 1 bis 5, dadurch gekennzeichnet, daß als je Molekül mindestens drei direkt an Silicium gebundene hydrolysierbare Gruppen aufweisende Siliciumverbindung (II) Silan der Formel

$R^4_nSiZ_{4-n}$,

wobei n 0 oder 1 ist, $R^4$ die im Anspruch 5 dafür angegebene Bedeutung hat, und Z gleiche oder verschiedene hydrolysierbare Gruppen bedeutet und ausgewählt ist aus der Gruppe bestehend aus

| | |
|---|---|
| Oximgruppen | $-ON=X$ |
| Aminogruppen | $-NR^7_2$ |
| Acylaminogruppen | $-NR^7COR^7$ |
| Aminoxygruppen | $-ONR^7_2$ |
| Acyloxygruppen | $-OOCR^7$ und |
| gegebenenfalls substituierte Kohlenwasserstoffoxygruppen | $-OR^7$, |

worin X gleiche oder verschiedene Reste der Formel

$R^5_2C=$ oder $R^6C=$,

bedeutet, worin $R^5$ gleiche oder verschiedene, einwertige Kohlenwasserstoffreste mit 1 bis 5 Kohlenstoffatom(en) je Rest und $R^6$ einen zweiwertigen Kohlenwasserstoffrest mit 5 bis 6 Kohlenstoffatomen bedeutet, und $R^7$ Wasserstoff oder gleiche oder verschiedene, einwertige, gegebenfalls substituierte Kohlenwasserstoffreste bedeutet, oder dessen 2 bis 10 Siliciumatome je Molekül aufweisende Teilhydrolysate verwendet worden sind.

**7.** Massen nach Anspruch 6, dadurch gekennzeichnet, daß als Siliciumverbindung (II) Silan der Formel

$R^4_nSi(ON=X)_{4-n}$,

worin n 0 oder 1 ist, $R^4$ die im Anspruch 5 dafür angegebene Bedeutung hat, und X gleiche oder verschiedene Reste der Formel

$R^5_2C=$ oder $R^6C=$,

bedeutet, worin $R^5$ gleiche oder verschiedene, einwertige Kohlenwasserstoffreste mit 1 bis 5 Kohlenstoffatom(en) je Rest und $R^6$ einen zweiwertigen Kohlenwasserstoffrest mit 5 bis 6 Kohlenstoffatomen bedeutet,
oder dessen 2 bis 10 Siliciumatome je Molekül aufweisende Teilhydrolysate verwendet worden sind.

**8.** Massen nach Anspruch 7, dadurch gekennzeichnet, daß als Silan Methyltris-(methylethylketoxim)-silan oder Tetra(methylethylketoxim)-silan verwendet worden ist.

**9.** Massen nach einem der Ansprüche 1 bis 8, dadurch gekennzeichnet, daß als mindestens ein weiterer Stoff zusätzlich zu Additiv (IV) solcher, ausgewählt aus der Gruppe der verstärkenden anorganischen Füllstoffe, nicht verstärkenden anorganischen Füllstoffe, Kondensationskatalysatoren, Weichmacher, Mittel zu Verbesserung der Haftung der aus den erfindungsgemäßen Massen hergestellten Elastomeren auf den Unterlagen, auf denen die Elastomere erzeugt wurden, Pigmente und löslichen Farbstoffe, mitverwendet worden ist.

## Claims

**1.** Materials which are suitable for coating the surface of electrical high-voltage insulators, are stable on storage provided water is excluded and can be cross-linked to form elastomers at room temperature if water is admitted and which have been produced by blending
(I) a diorganopolysiloxane having terminal groups capable of condensation with
(II) a silicon compound having at least three hydrolysable groups directly bound to silicon per molecule,
(III) optionally an organic, nonreactive solvent
and also at least one further substance, characterised in that as at least one further substance
(IV) an additive has been used which has been produced by blending
(A) 60 to 80% by weight of a diorganopolysiloxane containing 75 to 85 mol % of dimethylsiloxane units and 15 to 25 mol % of vinylmethylsiloxane units,
(B) 20 to 35% by weight of titanium dioxide or zirconium dioxide,
(C) 0.05 to 0.25% by weight of platinum, calculated as the element, in the form of a platinum compound or a platinum complex and
(D) 1 to 5% by weight of an organosilicon compound containing basic nitrogen bound to silicon via carbon,
the sum of the percentages chosen in each case within the ranges specified above under (A) to (D) being 100% by weight and the percentages by weight in each case being based on the total weight of the additive (IV).

**2.** Materials according to Claim 1, characterised in that an additive (IV) has been used which has been produced
(1) by blending the constituents (A) to (D) according to Claim 1 and, subsequently to the blending,
(2) by heating the mixture for at least 120 minutes at 80° to 150°C.

**3.** Materials according to Claim 1 or 2, characterised in that the additive (IV) has been used in quantities of 1 to 4% by weight, based on the total weight of the particular material capable of crosslinking to form elastomers, without the organic solvent (III) optionally used concomitantly.

**4.** Materials according to Claim 1, 2 or 3, characterised in that as
(D) organosilicon compound containing basic nitrogen bound to silicon via carbon use has been made of those compounds which are selected from the group comprising the silanes of the formula

$$Y_aR_bSi(OR^1)_{4-a-b} ,$$

where R denotes identical or different monovalent hydrocarbon radicals containing 1 to 8 carbon atoms per radical, $R^1$ denotes identical or different alkyl groups containing 1 to 4 carbon atom(s) per radical or a radical of the formula $-SiR_3$, R having the meaning specified above therefor, and Y denotes identical or different monovalent SiC-bound organic radicals containing basic nitrogen, a is 1

or 2 and b is 0, 1 or 2,
and disiloxanes of the formula

$(Y_cR_dSi)_2O$,

where R and Y have the meaning specified above therefore, c is 0, 1, 2 or 3, in particular 1, provided the disiloxanes have at least one radical Y, and d is 0, 1, 2 or 3, in particular 2.

**5.** Materials according to one of Claims 1 to 4, characterised in that as diorganopolysiloxane (I) having terminal groups capable of condensation use has been made of those of the formula

$HO(SiR^4_2O)_mSiR^4_2OH$ ,

where $R^4$ denotes a monovalent, optionally halogenated hydrocarbon radical containing 1 to 18 carbon atom(s) per radical, m is an integer having a value of at least 10 and the mean viscosity is 500 to $1x10^6$ mPa.s at 25°C.

**6.** Materials according to one of Claims 1 to 5, characterised in that as silicon compound (II) having at least three hydrolysable groups directly bound to silicon per molecule use has been made of a silane of the formula

$R^4_nSiZ_{4-n}$ ,

where n is 0 or 1, $R^4$ has the meaning specified therefor in Claim 5, and Z denotes identical or different hydrolysable groups and is selected from the group comprising

| | |
|---|---|
| oxime groups | $-ON=X$ |
| amino groups | $-NR^7_2$ |
| acylamino groups | $-NR^7COR^7$ |
| amineoxy groups | $-ONR^7_2$ |
| acyloxy groups | $-OOCR^7$ and |
| optionally substituted hydrocarbonoxy groups | $-OR^7$, |

where X denotes identical or different radicals of the formula

$R^5_2C=$ or $R^6C=$ ,

where $R^5$ denotes identical or different monovalent hydrocarbon radicals containing 1 to 5 carbon atom(s) per radical and $R^6$ denotes a divalent hydrocarbon radical containing 5 to 6 carbon atoms, and $R^7$ denotes hydrogen or identical or different monovalent, optionally substituted hydrocarbon radicals,
or partial hydrolysates thereof having 2 to 10 silicon atoms per molecule.

**7.** Materials according to Claim 6, characterised in that as silicon compound (II) use has been made of a silane of the formula

$R^4_nSi(ON=X)_{4-n}$ ,

where n is 0 or 1, $R^4$ has the meaning specified therefor in Claim 5, and X denotes identical or different radicals of the formula

$R^5_2C=$ or $R^6C=$ ,

where $R^5$ denotes identical or different monovalent hydrocarbon radicals containing 1 to 5 carbon atom(s) per radical and $R^6$ denotes a divalent hydrocarbon radical containing 5 to 6 carbon atoms,
or partial hydrolysates thereof having 2 to 10 silicon atoms per molecule.

8. Materials according to Claim 7, characterised in that methyltris(methylethylketoxime)silane or tetra-(methylethylketoxime)silane has been used as silane.

9. Materials according to one of Claims 1 to 8, characterised in that wherein as at least one further substance additional to additive (IV), one has been used concomitantly which is selected from the group comprising the reinforcing inorganic fillers, nonreinforcing inorganic fillers, condensation catalysts, plasticisers, agents for improving the adhesion of the elastomers produced from the materials according to the invention to the substrates on which the elastomers were produced, pigments and soluble dyestuffs.

## Revendications

1. Compositions convenant au revêtement de la surface d'isolateurs électriques à haute tension, pouvant être stockées à l'abri de l'eau et pouvant se réticuler, après apport d'eau à la température ambiante, en élastomères, et qui ont été préparées par mélange :
   (I) d'un polydiorganosiloxane comportant des groupes terminaux condensables et
   (II) d'un composé du silicium comportant par molécule au moins trois groupes hydrolysables directement liés au silicium,
   (III)et éventuellement d'un solvant organique non réactif,
   ainsi que d'au moins une autre substance, caractérisées en ce qu'on a utilisé en tant qu'au moins une autre substance
   (IV) un additif, qui a été préparé par mélange :
   (A) de 60 à 80 % en poids d'un polydiorganosiloxane comportant de 75 à 85 % en moles de motifs diméthylsiloxane et de 15 à 25 % en moles de motifs vinylméthylsiloxane,
   (B) de 20 à 35 % en poids de dioxyde de titane ou de dioxyde de zirconium,
   (C) de 0,05 à 0,25 % en poids de platine, calculé sous forme de l'élément platine, sous forme d'un composé du platine ou d'un complexe du platine, et
   (D) de 1 à 5 % en poids d'un composé organique du silicium comportant un azote basique lié au silicium par l'intermédiaire d'un carbone,
   la somme des pourcentages choisis dans les intervalles mentionnés en (A) à (D) ci-dessus étant égale à 100 %, les différents pourcentages se rapportant tous au poids total de l'additif (IV).

2. Compositions selon la revendication 1, caractérisées en ce qu'on utilise un additif (IV) qui a été préparé :
   (1) par mélange des constituants (A) à (D) selon la revendication 1, mélange suivi
   (2) d'un chauffage, pendant au moins 120 minutes, du mélange à une température de 80 à 150 °C.

3. Compositions selon la revendication 1 ou 2, caractérisées en ce que l'additif (IV) est utilisé en des quantités de 1 à 4 % en poids par rapport au poids total des compositions considérées, réticulables pour donner des élastomères, sans le solvant organique (III) éventuellement utilisé en même temps.

4. Compositions selon la revendication 1, 2 ou 3, caractérisées en ce que l'on utilise en tant que composé organique du silicium (D) comportant un atome d'azote basique lié au silicium par l'intermédiaire d'un atome d'oxygène, un composé de ce genre parmi l'ensemble comprenant les silanes de formule :

   $$Y_aR_bSi(OR^1)_{4-a-b}$$

   où X représente des hydrocarbonés monovalents identiques ou différents ayant chacun de 1 à 8 atomes de carbone, $R^1$ représente des groupes alkyle identiques ou différents ayant chacun de 1 à 4 atomes de carbone, ou encore un résidu de formule $-SiR_3$ où R a les significations qui lui sont donnés ci-dessus, Y représente des radicaux organiques monovalents, identiques ou différents, liés par une liaison SiC, et comportant un atome basique, a vaut 1 ou 2 et b vaut 0, 1 ou 2
   et les disiloxanes de formule :

   $$(Y_cR_dSi)_2O$$

   dans laquelle R et Y ont les significations données ci-dessus, c vaut 0, 1, 2 ou 3 et en particulier 1, du moment que les disiloxanes comportent au moins un radical Y, et que d vaut 0, 1, 2 ou 3, en particulier

2.

**5.** Compositions selon les revendications 1 à 4, caractérisées en ce qu'on utilise en tant que polydiorganosiloxane (I) comportant des groupes terminaux condensables, un tel composé de formule :

$HO(SiR^4{}_2O)_mSiR^4{}_2OH$

dans laquelle $R^4$ est un radical hydrocarboné monovalent éventuellement halogéné ayant de 1 à 18 atomes de carbone par radical, m est un nombre entier valant au moins 10, et la viscosité moyenne des polydiorganosiloxanes (I) est de 500 à $1.10^6$ mPa.s à 25 ° C.

**6.** Compositions selon l'une des revendications 1 à 5, caractérisées en ce qu'on utilise en tant que composé du silicium (II) comportant par molécule au moins trois groupes hydrolysables liés directement au silicium, un silane de formule :

$R^4{}_nSiZ_{4-n}$

où n vaut 0 ou 1, $R^4$ a les significations données ci-dessus, et Z représente des groupes hydrolysables identiques ou différents, qui sont choisis parmi l'ensemble comprenant :

| | |
|---|---|
| les groupes oxime | $-ON=X$ |
| les groupes amino | $-NR^7{}_2$ |
| les groupes acylamino | $-NR^7COR^7$ |
| les groupes aminoxy | $-ONR^7{}_2$ |
| les groupes acyloxy | $-OOCR^7$ et |
| les groupes hydrocarboxy éventuellement substitués | $-OR^7$ |

où X représente des radicaux identiques ou différents de formule :

$R^5{}_2C=$ ou $R^6C=$

où $R^5$ représente des radicaux hydrocarbonés monovalents identiques ou différents ayant chacun de 1 à 5 atomes de carbone, et $R^6$ est un radical hydrocarboné divalent ayant 5 ou 6 atomes de carbone, et $R^7$ est un hydrogène ou représente des radicaux hydrocarbonés identiques ou différents, monovalents, éventuellement substitués, ou leurs produits d'hydrolyse partielle comportant 2 à 10 atomes de silicium par molécule.

**7.** Compositions selon la revendication 6, caractérisées en ce qu'on utilise en tant que composé du silicium (II) un silane de formule :

$R^4{}_2Si(ON=X)_{4-n}$

dans laquelle n vaut 0 ou 1, $R^4$ a les significations données dans la revendication 5, et X représente des radicaux identiques ou différents de formule :

$R^5{}_2C=$ ou $R^6C=$

où $R^5$ représente des radicaux hydrocarbonés monovalents identiques ou différents ayant chacun de 1 à 5 atomes de carbone, et $R^6$ est un radical hydrocarboné divalent ayant 5 ou 6 atomes de carbone, ou leurs produits d'hydrolyse partielle comportant 2 à 10 atomes de silicium par molécule.

**8.** Compositions selon la revendication 7, caractérisées en ce qu'on utilise comme silane le méthyltris-(méthyléthylcétoxime)silane ou le tétra(méthyléthylcétoxime)silane.

**9.** Compositions selon l'une des revendications 1 à 8, caractérisées en ce qu'on utilise en tant qu'au moins une autre substance venant en plus de l'additif (IV) une telle substance choisie parmi l'ensemble comprenant les charges minérales à effet de renforcement, les charges minérales sans effet de

renforcement, les catalyseurs de condensation, les plastifiants, les additifs améliorant l'adhérence des élastomères préparés à partir des compositions selon l'invention sur les supports sur lesquels ont été préparés les élastomères, les pigments et les colorants solubles.